# FASCICULE DE BREVET EUROPEEN

(11) **EP 2 914 145 B1**
(45) Date de publication et mention de la délivrance du brevet: **02.11.2016**
(21) Numéro de dépôt: 13811617.3
(22) Date de dépôt: 05.11.2013
(51) Int. Cl.: A45C 5/14, B65D 30/08, B65D 33/00, B65D 81/03

(54) **PROCEDE DE PREPARATION DE PIECES DE TOILE; PIECES ET SAC ISSUS DE L'APPLICATION DU PROCEDE**
VERFAHREN ZUR HERSTELLUNG VON STOFFTEILEN; TEILE UND BEUTEL ERHALTEN AUS DIESEM VERFAHREN
METHOD FOR PREPARING PIECES OF FABRIC; PIECES AND BAG DERIVED FROM APPLICATION OF THE METHOD

(30) Priorité: 05.11.2012 CH 22522012
(43) Date de publication de la demande: 09.09.2015
(73) Titulaire: Codefine S.A., 1005 Lausanne (CH)
(72) Inventeur: SCHINASI, Piero, CH-1066 Epalinges (CH)
(74) Mandataire: Hanson, William Bennett
(86) Numéro de dépôt international: PCT/IB2013/059914
(87) Numéro de publication internationale: WO 2014/068545

(56) Documents cités:
- GB-A- 2 274 085
- GB-A- 2 316 653
- GB-A- 2 322 844
- GB-A- 2 346 078
- US-A- 2 716 558
- US-A1- 2007 082 158
- US-A1- 2011 268 375

## Description

### Référence à une demande antérieure

La présente demande revendique la priorité de la demande antérieure Suisse CH 02252/12 déposée le 5 novembre 2012 au nom de CODEFINE S.A.

### Domaine technique

La présente invention concerne un procédé de préparation des pièces de toile constitutives d'un sac en toile synthétique en vue de rigidifier les parois du sac et donner à celui-ci davantage de tenue; la présente invention concerne aussi les pièces et sac issus de l'application du procédé.

Des sacs en toile synthétique comportant un fond et quatre côtés verticaux, en général deux longs et deux courts, sont connus de tous, on peut citer à titre de simple référence le document EP0691286 (B1). D'autres emballages en toile sont par exemple connus de US 2007/0082158, US2011/0268375, US 2716558 et GB 2346078.

L'utilisation de feuilles à bulles pour la formation d'emballages est connu par exemple de GB 2274085, US 5855978 et US 4679242.

En théorie, ou lorsqu'on les dessine sur le papier, ces sacs tiennent parfaitement debout, leurs côtés sont bien verticaux et tendus et la bouche du sac reste ouverte et bien déployée pour accueillir ce que l'on souhaite transporter dans le sac.

En pratique, les côtés d'un vrai sac sont beaucoup moins obéissants que sur le papier, qu'ils tendent à s'incliner, puis à se coucher vers l'intérieur du sac, quelque fois à se mettre en torche avec leur vis-à-vis, mais que dans tous les cas cela aboutit à ce que la bouche du sac se ferme plus ou moins sournoisement.

Qui n'a pas fait cette expérience que, devant tenir des deux mains un objet ou charge (pelletée de sable ou brassée de feuilles mortes) afin de l'introduire dans un sac, on ne parvient pas à ouvrir la bouche du sac et qu'on est réduit à demander l'aide d'une autre personne pour tenir le sac ouvert.

Bien entendu, la différence majeure entre un sac et une caisse rigide, est que le sac peut être facilement plié, que l'espace qu'il occupe une fois plié est minime en comparaison de son volume utile déployé, et qu'il reste infiniment plus léger qu'un conteneur rigide. Il n'est pas question d'abandonner ces avantages traditionnels du sac en ayant recours à quelque forme de châssis interne ou externe pour remédier aux inconvénients précités. L'exercice veut que l'amélioration résulte exclusivement d'une modification des propriétés des pièces de toile, voire de leur agencement.

### Sommaire et description détaillée de l'invention

La présente invention a pour but de proposer un procédé de réalisation des pièces de toile, en particulier destinées à constituer les côtés verticaux d'un sac, de manière que, une fois réalisé au moyen desdites pièces le sac confectionné ait une tendance nettement plus prononcée que jusqu'ici à tenir debout alors qu'il est vide et à garder une forme telle que pour l'essentiel sa bouche reste ouverte. La présente invention vise aussi en finalité à proposer des pièces de toile réalisées selon le procédé, quelle que soit en fin de compte la destination des pièces et enfin un sac présentant les propriétés de tenue que lui procurent ses éléments constitutifs réalisés selon le procédé.

Comme souvent s'agissant d'objets ou constructions techniquement peu sophistiquées, la solution vient du mariage de deux composants que rien ne prédestine à s'unir, le deuxième composant étant issu d'un autre monde technique et y jouant un autre rôle avec d'autres fonctions.

En l'espèce, l'emprunt porte sur le film à bulles, bien connu et universellement utilisé pour emballer des objets fragiles. Les bulles remplies d'air portées par le film ayant pour fonction d'absorber et amortir les chocs et préserver ainsi des objets enveloppés à l'aide du film à bulles.

L'invention concerne un procédé de réalisation de pièces de toile selon la revendication 1, une pièce de toile selon la revendication 6 et un sac selon la revendication 10.

Dans sa version la plus dépouillée, le procédé selon l'invention consiste à assembler deux pièces de toile synthétique individuelles, par exemple en polypropylène, et un film à bulles placé en sandwich entre lesdites pièces, l'assemblage étant réalisé par encollage ou non de l'une des face de la pièce de toile puis insertion et collage (cas échéant) d'une pièce de film à bulles dont les dimensions sont en rapport (de préférence non-identiques) avec celles de la pièce de toile. Les deux pièces individuelles de toile sont assemblées par couture, laminage ou collage par exemple ou par d'autres méthodes équivalentes.

On peut appliquer le côté lisse ou le côté à protubérances du film à bulles contre la pièce de toile encollée lorsque l'une des faces de l'une des pièces de toile est encollée. L'une ou l'autre des manières ne conduit pas à un résultat absolument identique, le collage par la face à protubérance donnant à l'ensemble une rigidité légèrement supérieure.

On peut choisir de conserver, ou non, l'encollage mentionné plus haut, et, le cas échéant, de le pratiquer des deux côtés du film à bulles ou d'un seul côté.

Il peut être gênant de laisser le film à bulles s'étendre jusqu'au fin bord des pièces de toile car le film et les bulles interfèrent alors dans une zone où la couture des pièces de toile entre elles doit intervenir pour construire le sac. On préférera donc laisser une marque vierge sur le pourtour des pièces de toile et donc associer chaque pièce de toile avec une pièce de film à bulle dont les dimensions (par exemple la largeur et/ou la hauteur) sont légèrement inférieures à celles de la pièce de toile.

La différence des dimensions respectives des pièces de toile individuelles et de la pièce de film à bulle offre une marge de manoeuvre. En effet, plus cette différence de dimensions est accusée, plus le pliage du sac selon ses arêtes sera facile. Plus cette différence est réduite, plus la tenue du sac sera potentiellement grande. Il faut trouver le bon compromis en fonction du film à bulle lui-même et des caractéristiques de la toile, notamment son grammage.

Dans le mode d'exécution du "sandwich", l'une des pièces de toile, celle qui occupera une position externe, sera chargée de fournir la solidité du sac; alors que la deuxième pièce de toile ne sert qu'à emprisonner le film à bulle et peut donc être choisie d'un grammage inférieur à celui de la pièce de toile à vocation externe.

L'emprisonnement du film à bulles entre les deux pièces de toile peut aussi être réalisé par laminage d'une pièce de toile sur l'autre.

Enfin rien n'interdit d'utiliser deux pièces de toile de grammage identique, et donc de recourir à des tronçons de toile tubulaire aplatis et à l'intérieur desquels se trouve disposé le film à bulles, comme on met la main dans une chaussette. L'utilisation de toile tubulaire dont le coût est moindre peut donc être privilégiée si on le souhaite.

Comme on l'a rappelé d'emblée dans l'introduction, le pliage est un aspect fondamental dans l'industrie des sacs. Dans la majorité des cas, le pliage d'un sac intervient au moins en partie selon ses arêtes, c'est-à-dire selon les lignes de couture commune par lesquelles le fond et les quatre côtés du sac sont cousus entre eux. Cependant, il est très fréquent que des lignes de pliage soient imprimées ailleurs que le long des arêtes, en particulier lorsque les côtés courts et le fond s'articulent lors du pliage selon un soufflet, qui peut être orienté soit vers l'intérieur du sac, comme pour les cabas en papier, soit vers l'extérieur du sac.

Le résultat du procédé selon l'invention, c'est-à-dire l'association d'au moins deux pièces de toile individuelles avec un film à bulles en vue de constituer un côté d'un sac, présente ici un avantage très spectaculaire. En effet, lorsqu'un côté réalisé de cette façon est plié, par exemple selon une ligne oblique partant d'un coin inférieur et destinée à former soufflet avec le fond, le marquage du pli dans la matière duale (toile synthétique et film à bulle) donne lieu à un effet inconnu et nouveau à savoir que la ligne de pliage devient une ligne de déploiement préférentiel à effet de ressort. Pour schématiser, un sac traditionnel en toile uniquement a tendance à s'affaisser sur lui-même selon les lignes de pliage qu'on lui a imprimées. A l'inverse, un sac réalisé avec la toile associée au film à bulle selon l'invention va avoir une sorte de préférence pour le déploiement imprimée dans la matière, ou spécifiquement dans les divergences de comportement des deux parties qui la composent.

Certes, le sac ne va pas se déplier et s'ériger tout seul sous le seul effet du regard, mais très perceptiblement, le sac tend à retourner à une sorte de position de confort, qui est ouverte déployée et non fermée repliée. C'est bien sûr une particularité a priori insoupçonnée de l'assemblage toile - film à bulles, mais elle est particulièrement bienvenue eu égard au problème auquel l'invention s'attache à apporter une solution et est donc favorable à réaliser le but de l'invention.

Il est à noter que le tandem toile synthétique - film à bulles, n'empêche pas le pliage, qu'il n'épaissit les parois du sac que dans une faible mesure qui n'est pas gênante et enfin que le poids supplémentaire est insignifiant.

### Description détaillée des figures

On décrit ci-après des modes d'exécution de l'invention en se référant au dessin où :
La figure 1 est une vue en perspective plongeante, orientée vers le bas, du sac selon l'invention.
La figure 2 est une vue partielle de l'assemblage des pièces de toile et film à bulles;
La figure 3 est une vue en perspective plongeante partiellement tronquée du sac selon l'invention.

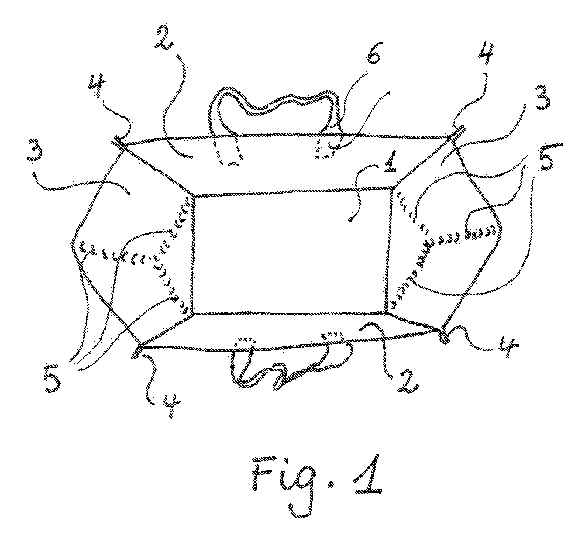

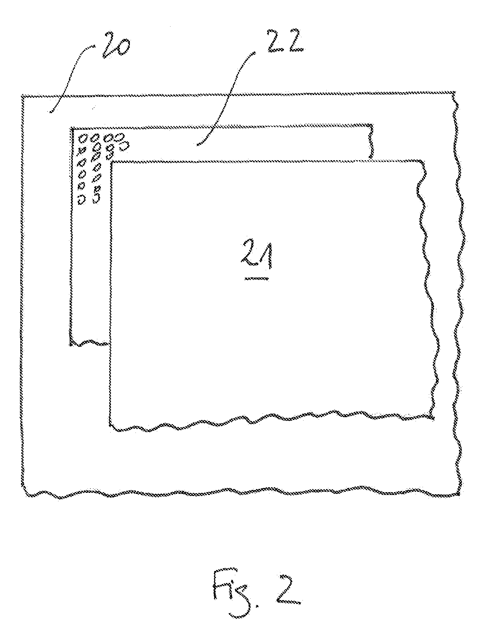

Sur les figures 1 et 2, on reconnaît le fond 1 du sac, ainsi que deux côtés longs verticaux 2 et deux côtés courts verticaux 3. Les quatre côtés sont réalisés à l'aide de deux pièces de toile synthétiques 20, 21 (figure 2), par exemple en polypropylène, qui sont chacune solidaires de quatre pièces de film à bulles 22 (figure 2). Les arêtes verticales des pièces de toile des quatre côtés sont cousues 4 entre elles par leurs arêtes verticales communes et sont également cousues sur le fond 1 de la même façon. On relève les traces de pliage en soufflet 5 qui sont marquées dans les pièces de toile des côtés courts 3.

Enfin on relève que des anses en tresse synthétique 6 sont cousues 7 proches de l'extrémité supérieure des deux côtés longs 2 du sac.

En observant la figure 1, on se rend compte qu'en raison du pliage en soufflet du sac, les côtés courts restent légèrement pincés vers l'extérieur, donnant à la bouche du sac une forme un peu hexagonale.

Il convient de préciser que la figure 1 est réalisée d'après une photographie d'un sac réel, qui se tient tout seul droit debout et bien ouvert. La figure ne fait donc nullement appel à la magie du dessin, c'est vraiment ce que l'on obtient en construisant le sac selon le procédé.

Sur la figure 2, on a illustré un mode d'exécution de l'invention avec l'assemblage des éléments formant une paroi (2 ou 3) du sac. Ainsi, chaque paroi comprend deux pièces de toile individuelle 20, 21 entre lesquelles un film à bulles 22 est placé. De préférence, la dimension du film 22 est inférieure à celle des pièces 20, 21 pour permettre l'assemblage des deux pièces en toile 20, 21 individuelle l'une à l'autre comme décrit ci-dessus.

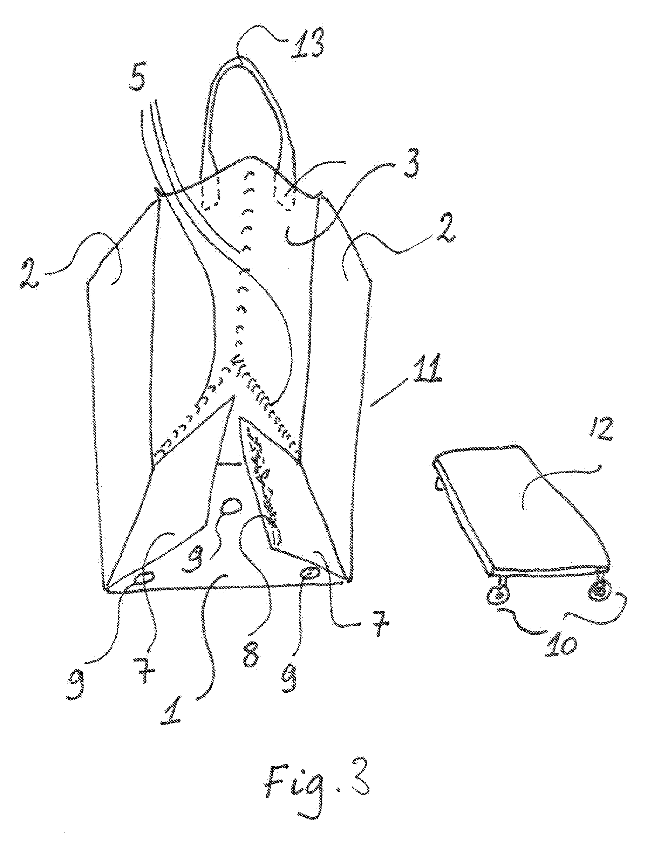

Sur la figure 3, on reconnaît le sac 11 ainsi que ses deux côtés longs 2. On reconnaît aussi les traces de pliage en soufflet 5 apparaissant dans les côtés courts 3 (dont un seul est représenté sur la figure). Ce qui change par rapport à la figure 1 est essentiellement le fond, qui reçoit un aménagement permettant de faire rouler le sac sur le sol.

Cet aménagement consiste l'ajout de deux rabats 7 en portefeuille, en toile synthétique, cousus selon les arêtes communes entre le fond 1 et les côtés longs 2. Chacun des deux rabats porte un organe d'accrochage (tapis de boucles et de crochets) 8 de manière qu'ils puissent être mis en coopération l'un avec l'autre. On distingue aussi dans le fond 1 du sac, des trous formant guichets dont le nombre et la position permet de laisser passer au travers eux les roues 10 fixées sous une plaque 12.

La plaque 12 est préférablement réalisée en polypropylène alvéolaire (nid d'abeille) pour les propriétés de rigidité, de solidité et de légèreté de cette matière.

Lorsque l'on souhaite adapter la plaque 12 au fond 1, on relève les deux rabats 7 et l'on introduit les roues 10 dans les trous 9 jusqu'à ce que la plaque repose sur la toile du fond. Ensuite on rabaisse les deux rabats 7 et l'on verrouille la plaque contre le fond par pressage des organes 8 l'un contre l'autre.

Pour terminer, on observe qu'une anse 13 est fixée sur au moins un côté court 3 de manière que l'utilisateur puisse tirer derrière lui le sac roulant selon la deuxième variante du sac selon l'invention.

Grâce aux propriétés des diverses pièces de toile solidaires de pièces de film à bulle, qui résultent du procédé selon l'invention, on obtient un sac qui reste vraiment debout et ouvert, ce d'autant s'il est monté sur roulettes tel que dans la deuxième variante car la plaque joue aussi un rôle stabilisateur. En atteignant si bien son but le sac selon l'invention ouvre des horizons nouveaux d'utilisation, par exemple dans les centres commerciaux et les grandes surfaces. Contrairement au traditionnel chariot commercial, le client peut emporter et charger le sac rempli directement dans le coffre de sa voiture.

Les modes d'exécution de l'invention sont donnés à titre d'exemples illustratifs et ne doivent pas être considérés comme limitatifs. Des variations sont possibles dans la cadre de la protection revendiquée, notamment en faisant appel à des moyens équivalents.

A titre d'exemple de variantes, on peut envisager de proposer des pièces de toile plus complexes comprenant non pas seulement deux pièces de toile et un film à bulles en sandwich, mais plus d'un film à bulle entre les deux pièces de toile, ou alors un assemblage de trois pièces de toile et deux films à bulles, ces éléments étant placés en alternance. Dans un tel cas, les différentes pièces de toile peuvent avoir un même grammage ou non, et les films à bulles la même construction (densité, taille forme de bulles) ou non. Le choix peut se faire en fonction de l'application, des circonstances ou des propriétés souhaitées de l'objet (par exemple du sac) à fabriquer.

## Revendications

1. Procédé de réalisation de pièces de toile, destinées à constituer les côtés verticaux d'un sac en toile synthétique comprenant au moins une première pièce de toile, **caractérisé en ce que** l'on fixe une deuxième pièce de toile sur la première pièce de toile après avoir placé au moins une pièce de film à bulles entre lesdites pièces de toile de manière à enfermer en sandwich la pièce de film à bulles entre les deux pièces de toile.

2. Procédé selon la revendication 1, **caractérisé en ce que** les deux pièces de toile sont fixées l'une à l'autre par couture, laminage ou collage.

3. Procédé selon la revendication 1 ou 2, **caractérisé en ce que** l'on colle au moins l'une des faces de la pièce de film à bulles sur l'une des deux pièces de toile.

4. Procédé selon la revendication 1 , 2 ou 3, **caractérisé en ce que** l'on colle les deux faces de la pièce de film à bulles sur les faces en regard des deux pièces de toile.

5. Procédé selon l'une des revendications précédentes, **caractérisé en ce que** les deux pièces de toile ont un même grammage ou un grammage différent.

6. Pièce de toile obtenue par le procédé de l'une des revendications 1 à 5, **caractérisée en ce que** deux pièces de toile individuelles (20,21) sont rendues solidaires d'au moins une pièce de film à bulle (22) par le fait que les deux pièces de toile sont fixées l'une à l'autre et qu'elles enferment entre elles en sandwich au moins une pièce de film à bulles, collée ou non à l'une et/ou l'autre des pièces de toile.

7. Pièce de toile selon la revendication précédente, dans laquelle lesdites pièces de toile individuelles sont en polypropylène.

8. Pièce de toile selon ta revendication précédente, dans laquelle les deux pièces de toile individuelles ont un même grammage ou un grammage différent.

9. Pièce de toile selon l'une des revendications précédentes 6 à 8, **caractérisé en ce que** la dimension du film à bulle est différente de la dimension des pièces de toile individuelles,

10. Sac en pièces de toile issu du procédé selon l'une des revendications 1 à 5, **caractérisé en ce qu'**au moins l'un de ses côtés (2, 3) est réalisé au moyen de deux pièces de toile (20, 21) solidaires d'au moins une pièce de film à bulle (22), les deux pièces de toile étant fixées l'une à
l'autre et enfermant entre elles en sandwich au moins une pièce de film à bulles, collée ou non à l'une et/ou l'autre des pièces de toile.

11. Sac selon la revendication précédente, dans laquelle les deux pièces de toile sont en polypropylène.

12. Sac selon la revendication précédente, dans laquelle les deux pièces de toile ont un même grammage ou un grammage différent.

13. Sac selon l'une des revendications précédentes 10 à 12, **caractérisé en ce que** la dimension du film à bulle est différente de la dimension des pièces de toile

14. Sac selon l'une des revendications 10 à 13, **caractérisé en ce que** son fond (1) est muni d'une plaque (12), sous laquelle sont fixées des roulettes (10), qui coopèrent avec des trous ou guichets (9) pratiqués dans le fond (1) et la plaque (12) étant maintenue contre le fond (1) par deux rabats (7) collaborant par un organe d'accrochage dont chacun porte une moitié fonctionnelle (8).

## Patentansprüche

1. Verfahren für die Herstellung von Stoffteilen, die dazu bestimmt sind, die vertikalen Seiten eines Beutels aus synthetischem Material zu bilden, umfassend mindestens ein erstes Stoffteil, **dadurch gekennzeichnet, dass** ein zweites Stoffteil auf dem ersten Stoffteil befestigt wird, nachdem mindestens ein Blasenfolienteil zwischen den Stoffteilen platziert wurde, so dass das Blasenfolienteil zwischen den zwei Stoffteilen sandwichartig eingeschlossen ist.

2. Verfahren nach Anspruch 1, **dadurch gekennzeichnet, dass** die zwei Stoffteile mittels Nähen, Laminieren oder Kleben miteinander verbunden sind.

3. Verfahren nach Anspruch 1 oder 2, **dadurch gekennzeichnet, dass** mindestens eine der Flächen des Blasenfolienteils auf eines der zwei Stoffteile geklebt wird.

4. Verfahren nach Anspruch 1, 2 oder 3, **dadurch gekennzeichnet, dass** die zwei Flächen des Blasenfolienteils auf die gegenüberliegenden Flächen der zwei Stoffteile geklebt werden.

5. Verfahren nach einem der vorangehenden Ansprüche, **dadurch gekennzeichnet, dass** die zwei Stoffteile ein gleiches Flächengewicht oder ein unterschiedliches Flächengewicht haben.

6. Stoffteil, erhalten gemäß Verfahren nach einem der Ansprüche 1 bis 5, **dadurch gekennzeichnet, dass** zwei individuelle Stoffteile (20, 21) mit mindestens einem Blasenfolienteil (22) dadurch fest verbunden sind, dass die zwei Stoffteile aneinander befestigt sind und dass sie zwischen sich mindestens ein Blasenfolienteil sandwichartig einschließen, das mit dem einen und/oder dem anderen der Stoffteile verklebt ist oder nicht.

7. Stoffteil nach vorangehendem Anspruch, wobei die individuellen Stoffteile aus Polypropylen sind.

8. Stoffteil nach vorangehendem Anspruch, wobei die zwei individuellen Stoffteile ein gleiches Flächengewicht oder ein unterschiedliches Flächengewicht haben.

9. Stoffteil nach einem der vorangehenden Ansprüche 6 bis 8, **dadurch gekennzeichnet, dass** die Größe der Blasenfolie von der Größe der individuellen Stoffteile unterschiedlich ist.

10. Beutel als Endprodukt des Verfahrens nach einem der Ansprüche 1 bis 5, **dadurch gekennzeichnet, dass** mindestens eine seiner Seiten (2, 3) mittels zweier Stoffteile (20, 21) hergestellt ist, die mit mindestens einem Blasenfolienteil (22) fest verbunden sind, wobei die zwei Stoffteile miteinander verbunden sind und zwischen sich mindestens ein Blasenfolienteil sandwichartig einschließen, das mit dem einen und/oder dem anderen der Stoffteile verklebt ist oder nicht.

11. Beutel nach vorangehendem Anspruch, wobei die zwei Stoffteile aus Polypropylen sind.

12. Beutel nach vorangehendem Anspruch, wobei die zwei Stoffteile ein gleiches Flächengewicht oder ein unterschiedliches Flächengewicht haben.

13. Beutel nach einem der vorangehenden Ansprüche 10 bis 12, **dadurch gekennzeichnet, dass** sich die Größe der Blasenfolie von der Größe der Stoffteile unterscheidet.

14. Beutel nach einem der Ansprüche 10 bis 13, **dadurch gekennzeichnet, dass** sein Boden (1) mit einer Platte (12) ausgestattet ist, unter der Rollen (10) befestigt sind, die mit in den Boden (1) eingearbeiteten Löchern oder Fenstern (9) zusammenwirken, und die Platte (12) von zwei Klappen (7), die mittels eines Verbindungsorgans zusammenwirken, wobei jede eine funktionale Hälfte (8) trägt, gegen den Boden (1) gehalten wird.

## Claims

1. A method for the production of pieces of fabric, intended to constitute the vertical sides of a bag of synthetic fabric including at least a first piece of fabric, **characterized in that** a second piece of fabric is fixed on the first piece of fabric after having placed at least one piece of bubble wrap between said pieces of fabric so as to sandwich the piece of bubble wrap between the two pieces of fabric.

2. The method according to Claim 1, **characterized in that** the two pieces of fabric are fixed one to the other by sewing, laminating or bonding.

3. The method according to Claim 1 or 2, **characterized in that** at least one of the faces of the piece of bubble wrap is bonded on one of the two pieces of fabric.

4. The method according to Claim 1, 2 or 3, **characterized in that** the two faces of the piece of bubble wrap are bonded on the opposite faces of the two pieces of fabric.

5. The method according to one of the preceding claims, **characterized in that** the two pieces of fabric have the same grammage or a different grammage.

6. A piece of fabric obtained by the method of one of Claims 1 to 5, **characterized in that** two individual pieces of fabric (20, 21) are secured to at least one piece of bubble wrap (22) **in that** the two pieces of fabric are fixed one to the other and that they sandwich between them at least one piece of bubble wrap, bonded or not to one and/or the other of the pieces of fabric.

7. The piece of fabric according to the preceding claim, in which said individual pieces of fabric are of polypropylene.

8. The piece of fabric according to the preceding claim, in which the two individual pieces of fabric have the same grammage or a different grammage.

9. The piece of fabric according to one of the preceding Claims 6 to 8, **characterized in that** the dimension of the bubble wrap is different from the dimension of the individual pieces of fabric.

10. A bag made of pieces of fabric derived from the method according to one of Claims 1 to 5, **characterized in that** at least one of its sides (2, 3) is realized by means of two pieces of fabric (20, 21) secured to at least one piece of bubble wrap (22), the two pieces of fabric being fixed one to the other and sandwiching between them at least one piece of bubble wrap, bonded or not to one and/or the other of the pieces of fabric.

11. The bag according to the preceding claim, in which the two pieces of fabric are of polypropylene.

12. The bag according to the preceding claim, in which the two pieces of fabric have the same grammage or a different grammage.

13. The bag according to one of the preceding Claims 10 to 12, **characterized in that** the dimension of the bubble wrap is different from the dimension of the pieces of fabric.

14. The bag according to one of Claims 10 to 13, **characterized in that** its base (1) is provided with a plate (12), beneath which rollers (10) are fixed which cooperate with holes or apertures (9) formed in the base (1), and the plate (12) being held against the base (1) by two flaps (7) collaborating by an attachment member, of which each carries a functional half (8).
